# DEMANDE DE BREVET EUROPEEN

(11) **EP 1 162 026 A1**
(43) Date de publication de la demande: **12.12.2001**
(21) Numéro de dépôt: 01401192.8
(22) Date de dépôt: 10.05.2001
(51) Int. Cl.: B23K 26/14, B23K 9/10

(54) **Soudage hybride laser-arc avec contrôle du positionnement des prises de masse**

(30) Priorité: 31.05.2000 FR 0007012
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); LA SOUDURE AUTOGENE FRANCAISE, F-75007 Paris (FR)
(72) Inventeur: Fortain, Jean-Marie, 95520 Osny (FR); Lefebvre, Philippe, 95310 saint-Ouen L'Aumone (FR); Bonnet, Christian, 95650 Puiseux-Pontoise (FR)

(57) **Abrégé**

Procédé de soudage hybride par mise en oeuvre d'un faisceau laser et d'un arc électrique pour réaliser un cordon de soudure. L'arc électrique est établi entre une électrode reliée à un premier pôle d'une source de courant et au moins une pièce à souder reliée à un deuxième pôle d'une source de courant par l'intermédiaire d'au moins une prise de masse électriquement conductrice en contact avec ladite pièce à souder. Pour obtenir un soudage efficace, on opère un contact entre la prise de masse et la ou une pièce à souder latéralement et/ou en amont du point d'impact de l'arc électrique sur la ou les pièces à souder, en considérant le sens de formation du joint de soudure, de manière à équilibrer les forces liées au champ électromagnétique induit agissant sur le bain de métal liquide. Le procédé et l'installation de l'invention sont particulièrement adaptés à une production en série de pièces pour l'industrie automobile, tels des flancs raboutés utilisables pour fabriquer par exemple les éléments de carrosserie de véhicules automobiles, des structures d'aéronefs ou de tubes.

## Description

La présente invention concerne un procédé et une installation hybrides de soudage combinant un faisceau laser et un arc électrique, par exemple un arc plasma, et leur application au soudage des flancs raboutés destinés à l'industrie automobile ou 'tailored blanks" ou au soudage de tubes.

Afin de palier les inconvénients que présentent les procédés de soudage par laser ou les procédés de soudage à l'arc ont été développés des procédés mixtes ou hybrides combinant un ou plusieurs faisceaux laser avec un ou plusieurs arcs électriques, en particulier des procédés combinés de soudage par faisceau laser et jet de plasma d'arc, encore appelés procédés de soudage plasma-laser ou plus généralement procédés laser-arc.

De tels procédés de soudage hybrides ont été décrits notamment dans les documents EP-A-793558 ; EP-A-782489 ; EP-A-800434 ; US-A-5,006,688 ; US-A-5,700,989 ; EP-A-844042 ; *Laser GTA'Welding of aluminium alloy 5052,* TP Diebold et CE Albright, 1984, p. 18-24 ; SU-A-1815085, US-A-4,689,466 ; *Plasma arc augmented* laser *welding,* RP Walduck et J Biffin, p.172-176, 1994; ou *TIG or MIG arc augmented laser welding of thick mild steel plate, Joining and Materials,* de J Matsuda et al., p. 31-34, 1988.

De façon générale, les procédés de soudage laser-arc sont des procédés de soudage hybrides ou mixtes qui associent le soudage à l'arc électrique à un faisceau laser de manière à générer un arc électrique entre une électrode, fusible ou non fusible, et la pièce à souder, et à focaliser un faisceau laser de puissance, notamment un laser de type YAG ou de type CO₂, dans la zone d'arc, c'est-à-dire au niveau ou dans le plan de joint obtenu par réunion bord-à-bord des parties à souder entre elles.

Un tel procédé hybride permet d'améliorer considérablement les vitesses de soudage par rapport au soudage laser seul ou au soudage à l'arc seul.

De plus, un tel procédé hybride permet, en outre, d'accroître notablement les tolérances de positionnement des pièces avant soudage puisque le soudage par laser seul exige, en effet, une précision importante de positionnement des parties à souder vu la taille réduite du point focal du faisceau laser.

La mise en oeuvre d'un procédé plasma-laser, et plus généralement d'un procédé arc-laser, requiert l'utilisation d'une tête de soudage qui permet de combiner dans un espace réduit le laser et son dispositif de focalisation, ainsi qu'une électrode de soudage adaptée. Plusieurs configurations de têtes sont décrites dans les documents susmentionnés et l'on peut dire, en résumé, que le faisceau laser et l'arc électrique ou le jet de plasma peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, conjuguant leurs effets dans la zone de soudage.

Les procédés hybrides arc-laser sont notamment adaptés au soudage des flancs raboutés (ou tailored blanks) pour l'industrie automobile, dans le sens ou, en plus des avantages précédemment cités, il permet d'obtenir un cordon de soudure bien "mouillé" et exempt de caniveaux, comme le rappelle les documents EP-A-782489 ou le document *Laser plus arc equals power, Industrial Laser Solutions,* February 1999, p.28-30. Une telle soudure consiste à unir entre elles deux tôles ou pièces, en général en acier revêtu ou non-revêtu, par exemple en acier galvanisé ou électro-zingué, ou en alliage d'aluminium, d'épaisseurs différentes. Suivant les méthodes et les préparations de soudage utilisées, le joint à souder se caractérise classiquement par une différence de niveau entre les plans supérieurs de chacune des pièces à souder conduisant ainsi à la génération d'une "marche". Toutefois, on peut également rencontrer la situation inverse, à savoir des joints de type flancs raboutés dont les plans supérieurs sont alignés mais dont les plans inférieurs ne sont pas de même niveau et où donc la « marche » est située à l'envers du joint à souder.

Le procédé hybride est également adapté au soudage de nombreux types de joints, tels que, par exemple, le soudage d'angle ou à clin ou le soudage longitudinal de tubes ou le raboutage de pièces de révolution, notamment des pièces approximativement cylindriques.

Cependant, actuellement, un problème se pose, à savoir qu'il a été constaté au plan industriel qu'il apparaît très souvent des défauts des cordons de soudure ayant été réalisés par un tel procédé hybride laser-arc connu, lesdits cordons de soudure présentant un aspect irrégulier donc non-satisfaisant.

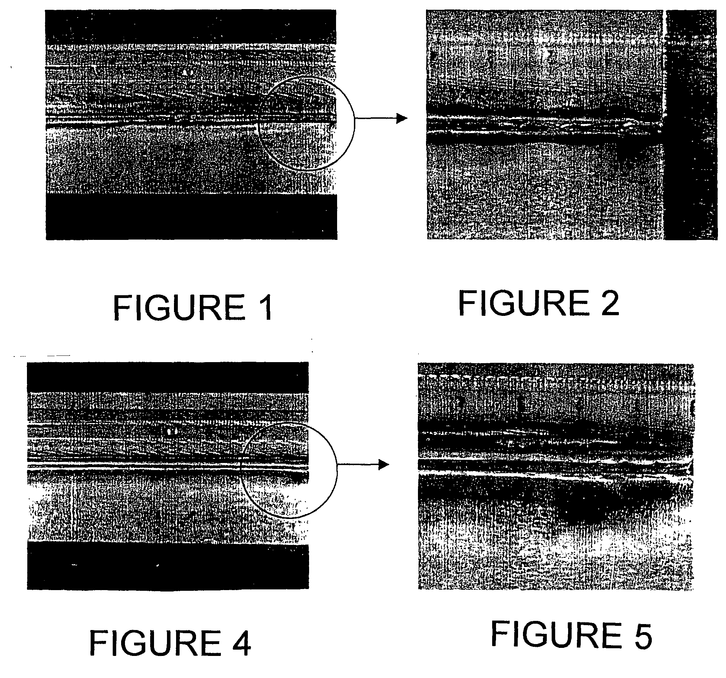

Ce défaut a été photographié et est montré sur les figures 1 et 2 ci-annexées, où l'on voit que la partie terminale (zone encerclée sur fig.1 et grossie sur fig. 2) du joint de soudure obtenue par un procédé de soudage hybride classique comporte un défaut d'une longueur plus ou moins importante, allant de quelques centimètres à plusieurs dizaines de centimètres. Dans ce cas, les cordons de soudure ont été réalisés sur des tôles en aciers galvanisés maintenues dans des outillages en acier inoxydable avec un laser ayant une puissance de 3.5 kW, un arc plasma de 160 A et 30 V, et avec une vitesse de soudage de 7 m/min.

De là, le but de la présente invention est de résoudre ce problème en proposant un procédé de soudage hybride laser-arc amélioré qui permette d'éviter ce défaut du cordon de soudure.

La solution apportée par la présente invention est alors un procédé de soudage hybride, ainsi qu'une installation de soudage hydride et l'utilisation d'un tel procédé ou d'une telle installation dans le soudage de pièces de destinations variées, en particulier de pièces destinées à l'industrie automobile, tels des flancs raboutés ou tailored blanks, ou des composants pour cellules ou structures d'aéronefs dans lesquels le dimensionnement impose la mise en oeuvre de pièces soudées d'épaisseurs très différentes, ou encore pour souder longitudinalement les deux bords longitudinaux d'une bande métallique, après leur mise en contact l'un avec l'autre (formage en "O") pour en faire un tube soudé dont la soudure est d'orientation parallèle à l'axe longitudinal du tube ou incliné par rapport audit axe, dans le cas du soudage en continu d'un tube dit hélicoïdal ou spiralé.

Plus précisément, l'invention concerne un procédé de soudage d'une ou plusieurs pièces métalliques à souder ou à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d'au moins une source de courant et au moins une pièce à souder reliée à au moins un deuxième pôle d'au moins une source de courant par l'intermédiaire d'au moins une prise de masse électriquement conductrice en contact avec ladite pièce à souder, caractérisé en ce qu'on opère au moins un contact entre au moins une prise de masse et la ou une pièce à souder latéralement et/ou en amont du point d'impact de l'arc électrique sur la ou les pièces à souder, en considérant le sens de formation du joint de soudure.

Dans le cadre de l'invention, on entend par "amont', une position située du côté déjà soudé du cordon en cours d'exécution par rapport au plan perpendiculaire au vecteur vitesse de soudage et passant par le point d'impact dudit arc.

Dans le cadre de l'invention, par "prise de masse", on entend un dispositif permettant de fermer le circuit électrique allant du premier pôle du générateur de soudage au deuxième pôle du générateur en passant par l'électrode réfractaire (soudage plasma ou TIG) ou fusible (soudage MIG/MAG) l'arc et les pièces en cours d'assemblage. Il s'agit donc du dispositif qui assure un contact électrique avec les pièces en cours d'assemblage et qui est relié par un câble électrique au deuxième pôle du ou des générateurs de soudage.

Selon un autre aspect, le procédé de soudage d'au moins deux pièces métalliques à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d'au moins une source de courant et au moins une desdites pièces à souder reliée à au moins un deuxième pôle d'au moins une source de courant par l'intermédiaire d'au moins une prise de masse électriquement conductrice en contact avec ladite pièce à souder, est caractérisé en ce qu'on opère au moins un premier contact entre au moins une première prise de masse et l'une des pièces à souder latéralement et/ou en amont du point d'impact de l'arc électrique sur les pièces à souder, en considérant le sens de formation du joint de soudure, et on opère au moins un deuxième contact entre au moins une seconde prise de masse et l'autre pièce à souder latéralement et/ou en amont du point d'impact de l'arc électrique sur les pièces à souder, en considérant le sens de formation du joint de soudure, lesdits premier contact et deuxième contact étant symétriques par rapport à l'axe longitudinal du cordon de soudure réalisé à la jonction desdites pièces.

Selon encore un autre aspect, le procédé de soudage d'une ou plusieurs pièces métalliques à souder ou à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d' au moins une source de courant et au moins une pièce à souder reliée à au moins un deuxième pôle d'au moins une source de courant par l'intermédiaire d'au moins une prise de masse électriquement conductrice en contact avec ladite pièce à souder, caractérisé en ce qu'on maîtrise la forme et/ou l'écoulement des lignes de courant dans la ou les pièces à souder entre le point d'impact de l'arc électrique sur la ou lesdites pièces et ladite au moins une prise de masse électriquement conductrice en contact avec ladite pièce à souder, de manière à équilibrer les forces liées au champ électromagnétique induit agissant sur le bain de métal liquide obtenu par fusion des bords de la ou desdites pièces à assembler et constituant, après refroidissement et solidification, un joint soudé, lorsque ledit bain de métal liquide est traversé par lesdites lignes de courant.

Selon le cas, le procédé de l'invention peut comprendre l'une ou plusieurs des caractéristiques suivantes :
- la distance séparant un plan de masse passant par un site de contact entre une prise de masse et une pièce à souder et perpendiculaire à l'axe longitudinal du cordon de soudure, et le plan d'arc passant par le site d'impact de l'arc électrique sur ladite pièce à souder et perpendiculaire à l'axe longitudinal du cordon de soudure est compris entre 0 mm et 300 mm, préférentiellement entre 1 mm et 200 mm.
- on soude ensemble deux pièces chacune en contact avec au moins une prise de masse, lesdites prises de masse étant isolées électriquement l'une de l'autre.
- on opère un contact entre au moins deux prises de masse et la ou les pièces à souder, lesdites deux prises de masse étant disposées symétriquement par rapport à l'axe longitudinal du cordon de soudure réalisé à la jonction desdites pièces.
- l'électrode est une électrode fusible ou non fusible.
- le faisceau laser est émis par un laser de type YAG ou CO₂.
- l'arc électrique est un arc-plasma, de préférence le faisceau laser et ledit arc sont délivrés par une tête de soudage unique.
- on utilise en tant que gaz d'assistance du faisceau laser un gaz choisi parmi l'argon, l'hélium, l'azote ou leurs mélanges et/ou on utilise en tant que gaz plasmagène un gaz choisi parmi l'argon, l'hélium ou leurs mélanges, avec éventuellement des additions d'un ou plusieurs composés secondaires choisis parmi l'azote, l'hydrogène et le dioxyde de carbone.
- pendant au moins une partie de la durée d'arrêt de soudage s'écoulant entre la fin du soudage d'un premier joint de soudure et le commencement du soudage d'un deuxième joint de soudure, notamment au tout début de cette phase d'arrêt de soudage ou à la fin de la phase de soudage, on interrompt, on atténue ou on diminue l'intensité de l'arc électrique, de préférence on interrompt, on atténue ou on diminue l'intensité de l'arc électrique approximativement en synchronisation volontaire ou différée avec l'envoi et/ou la déviation du faisceau laser vers les moyens d'absorption de rayonnement permettant d'absorber au moins une partie du rayonnement dudit faisceau laser.

Par ailleurs, l'invention porte aussi sur une installation de soudage hybride laser-arc permettant de souder une ou plusieurs pièces métalliques à souder ou à assembler, en particulier en mettant en oeuvre un des procédés de soudage ci-dessus, comprenant :
- au moins un générateur de faisceau laser
- au moins une électrode pour générer au moins un arc électrique, notamment un arc plasma,
- au moins une source de courant comprenant au moins un premier pôle auquel est relié ladite électrode
- au moins une prise de masse électriquement conductrice agencée de manière à venir au contact d'au moins une pièce à souder, ladite prise de masse étant reliée à au moins un deuxième pôle d'au moins une source de courant, le point de contact entre ladite prise de masse et la ou une pièce à souder étant situé latéralement et/ou en amont du point d'impact de l'arc électrique sur la ou les pièces à souder, en considérant le sens de formation du joint de soudure.

Selon le cas, l'installation de soudage de l'invention peut comprendre l'une ou plusieurs des caractéristiques suivantes :
- elle comporte au moins deux prises de masse isolées électriquement l'une de l'autre, de préférence lesdites deux prises de masse sont positionnées symétriquement par rapport à l'axe du cordon de soudage.
- elle comporte des moyens d'absorption de rayonnement laser permettant d'absorber, au moins temporairement, au moins une partie du rayonnement dudit faisceau laser pendant les phases d'arrêt de soudage ; des moyens support de pièces permettant de supporter et/ou maintenir la ou les pièces à souder durant le soudage ; des moyens d'amenée automatique de la ou des pièces à souder permettant d'amener et/ou de positionner automatiquement la ou les pièces à souder sur lesdits moyens support ; des moyens de maintien de pièces à souder permettant de maintenir en position la ou les pièces à souder, durant le soudage, sur lesdits moyens support ; des moyens d'évacuation automatique de la ou des pièces soudées permettant d'enlever les pièces desdits moyens support après soudage ; et/ou des moyens de pilotage permettant de piloter ou commander automatiquement les moyens d'amenée de pièces à souder ; les moyens d'évacuation des pièces soudées ; les moyens de déviation du faisceau laser ; le début et/ou la fin du soudage ; et/ou le déplacement relatif de tête distribuant l'arc et de la tête distribuant le faisceau laser par rapport aux pièces à souder.
- elle comporte des moyens d'équilibrage de courant permettant de contrôler la répartition du courant électrique cheminant entre chaque prise de masse et la source de courant associée à ladite prise de masse, de préférence lesdits moyens d'équilibrage de courant comportant au moins un circuit électronique permettant de commander ou maintenir un équilibre ou un déséquilibre du courant.
- elle comporte deux prises de masse et l'électrode délivrant l'arc électrique de soudage, de préférence un arc plasma, est alimentée par l'un des pôles de chacune des deux sources de courant, chaque source de courant étant reliée, en outre, par son autre pôle à l'une desdites prises de masse.

De plus, l'invention concerne aussi un procédé de fabrication de pièces ou de structures soudées destinées à l'industrie automobile ou à l'industrie aéronautique, dans lequel on réalise au moins un soudage desdites pièces par mise en oeuvre d'un procédé de soudage hybride laser-arc ou d'une installation de soudage comme donnés ci-dessus, de préférence les pièces ou structures soudées sont des éléments de carrosserie de véhicule ou des structures d'aéronefs, notamment des flancs raboutés en configuration bout-à-bout ou à clin.

Selon un autre aspect, l'invention porte aussi sur l'utilisation d'un procédé de soudage hybride selon l'invention pour assembler par soudage des pièces métalliques ayant des épaisseurs différentes, des nuances différentes et/ou des compositions métallurgiques différentes.

Selon encore un autre aspect, l'invention porte aussi sur l'utilisation d'un procédé de soudage hybride selon l'invention pour assembler par soudage après formage en « O » les deux bords longitudinaux parallèles d'une bande métallique de manière à fabriquer un tube soudé dont l'axe de la soudure est parallèle ou incliné par rapport à l'axe longitudinal du tube.

L'invention va être maintenant expliquée plus en détails en références aux figures annexées

Les inventeurs de la présente invention ont mis en évidence que le défaut du cordon de soudure à la base du problème à résoudre, tel que représenté sur les figures 1 et 2, est engendré par un phénomène de champ magnétique induit par le soudage des pièces métalliques et venant perturber la stabilité de l'arc électrique délivré par l'installation de soudage hybride.

Ce phénomène de champ magnétique peut être résolu selon l'invention grâce à l'utilisation d'un ou plusieurs contacts mécaniques ou prises de masse venant prendre appui, durant le soudage, sur l'une ou les deux pièces à souder de manière à contrôler les circulations de courant dans les pièces à souder entre le point d'impact de l'arc électrique et le ou les sites de contact entre la ou les pièces et la ou les prises de masse.

Lorsqu'il s'agit de souder deux pièces métalliques, l'une avec l'autre, on utilise préférentiellement au moins deux prises de masses conductrices du courant électrique venant opérer un contact mécanique de part et d'autre du joint de soudure, c'est-à-dire sur chacune des pièces, lesdites prises de masses étant soit isolées l'une de l'autre et surtout disposées symétriquement par rapport au joint de soudure en cours de réalisation. En effet, isoler les deux prises de masses l'une de l'autre est un plus qui n'a, cependant, de sens que si l'on contrôle aussi le courant passant par chacune d'elles de manière à le répartir de façon à contrôler les lignes de courant parcourant les pièces à souder, entre le point d'impact de l'arc électrique sur le plan de joint et les sites de contact entre lesdites prises de masses et lesdites pièces. En effet, ce qui est primordial pour obtenir une soudure de qualité n'est pas d'assurer uniquement une symétrie « géométrique » des prises de masses, mais est, en fait, d'assurer une symétrie « électrique », c'est-à-dire une répartition correcte des lignes de courant. Ceci s'explique par le fait qu'assurer une symétrie seulement géométrique ne permet pas dans tous les cas d'obtenir aussi une symétrie électrique car il est difficile de contrôler exactement les résistances de contact se créant entre les prises de masses et les pièces à assembler de façon à ce qu'elles soient identiques. De ce fait, isoler les prises de masses l'une de l'autre et contrôler le courant traversant chacune d'elles permet de fixer quasi à volonté le chemin que suit le courant dans les pièces et permet ainsi de maîtriser le ou les champs magnétiques induits.

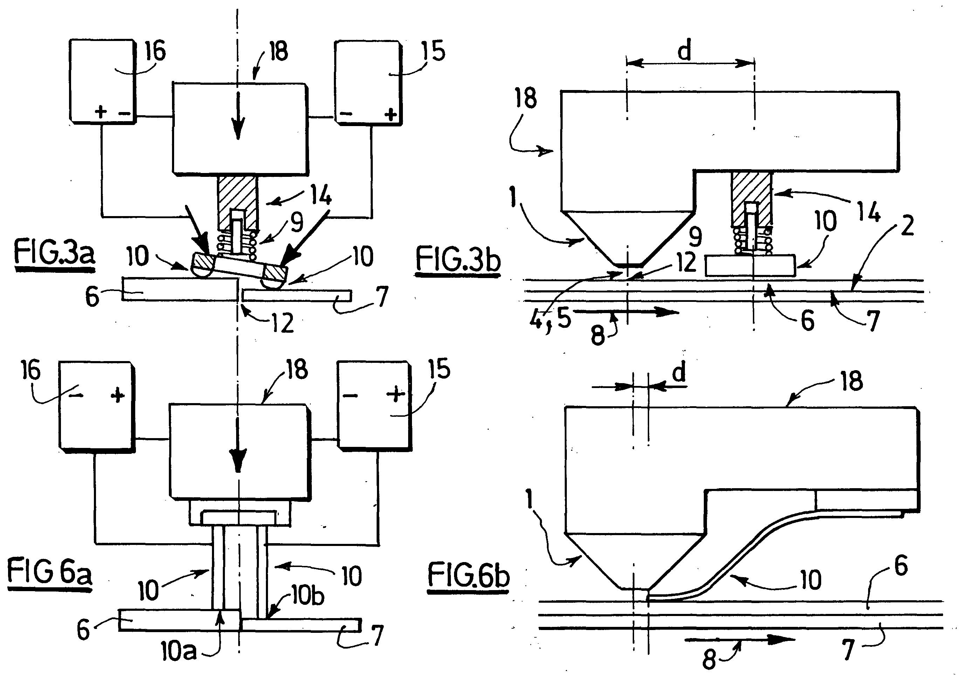

Comme montré sur les figures 3a, 3b, 6a et 6b, un moyen simple pour rendre approximativement égaux les courants passant par chacune des masses 10 est d'utiliser deux générateurs 15, 16 de soudage couplés chacun à une des deux prises de masse 10.

De préférence, selon l'invention, la ou les prises de masse 10 sont situées en amont de la tête 1 de soudage hybride délivrant l'arc 4 et le faisceau laser 5, en considérant le sens 8 de soudage du joint 2 de soudure, comme montré sur la figure 3, c'est-à-dire en aval du point d'impact 12 de l'arc électrique 4 et du faisceau 5 sur les pièces 6, 7 à souder, ainsi que montré sur lesdites figures 3a, 3b, 6a et 6b qui illustrent le cas du soudage de flancs raboutés (mis bout à bout) ou pièces 6, 7 d'épaisseurs différentes.

Afin d'assurer un contact efficace entre la ou les prises de masse 10, on utilise un patin 14 de réglage dont la position est ajustable par un mécanisme de réglage 9 adapté de façon à éloigner ou, le cas échéant, rapprocher la prise de masse 10 des pièces 6, 7 à souder. Par exemple, on peut utiliser un moyen à vérin mécanique, tel un ressort, fixé sur le corps de torche et dont l'autre extrémité recevant la masse du circuit électrique (prise de masse) de la torche à arc est plaquée en continu sur la ou les pièces à souder tout en assurant une isolation électrique entre prises de masses et le système verin.

Comme montré sur les figures 3a, 3b, 6a, 6b, 7a et 7b, l'arc électrique 4 et le faisceau laser 5 sont distribués ici par une tête 1 de soudage unique agencée dans un capotage 18 de protection.

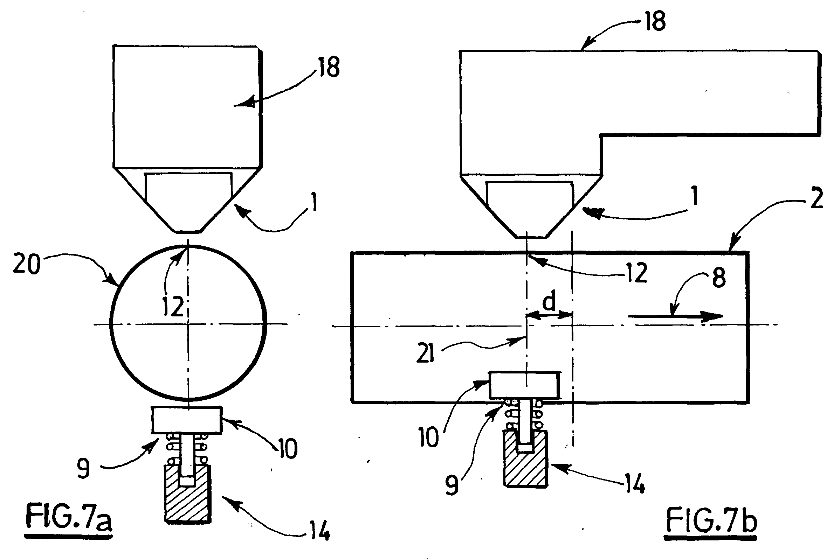

Dans le cas du soudage d'un tube illustré sur les figures 7a et 7b, on peut utiliser plusieurs prises de masses ou, à l'inverse, n'utiliser qu'une seule prise de masse 10 (Fig. 7a et 7b) située sous le tube, c'est-à-dire sur une ligne 21 située à l'opposé du point 12 d'impact de l'arc l'électrique et du faisceau laser sur le plan de joint 2 du tube en cours de réalisation ; en d'autres termes, sous le tube 20 de manière à répartir les lignes de courant cheminant dans le tube 20 de manière approximativement égale ou symétrique par rapport à l'axe du cordon en cours de réalisation entre le point d'impact 12 de l'arc sur le plan de joint 2 et le site ou la région de contact entre la prise de masse 10 et la surface du tube 20.

Toutefois, dans tous les cas, on maintient constante la distance torche 1 / prise de masse 10 durant le soudage afin d'éviter d'occasionner des variations de répartition des courants dans la ou les pièces à souder susceptibles d'engendrer des défauts de soudure.

De façon générale, le fait d'utiliser une (ou plusieurs) prise de masse 10 permettant d'opérer en continu un contact mécanique électriquement conducteur sur la ou les pièces 6, 7, 20 à souder permet d'éliminer totalement les perturbations électriques engendrées par l'arc et donc d'aboutir à la formation d'un cordon de soudage régulier et sans défaut même en fin de joint 2 de soudure.

Des essais réalisés dans les mêmes conditions opératoires que celles des figures 1 et 2 mais en utilisant en plus une (ou des) prise de masse 10 conformément à l'invention, ont permis de vérifier l'efficacité du procédé hybride de l'invention ; les résultats obtenus ont été photographiés et sont schématisés sur les figures 4 et 5.

Comme on peut le voir sur la figure 4, la zone terminale (zone encerclée) du cordon de soudure ainsi obtenue est régulière et sans défaut lorsqu'on la compare aux figures 1 et 2 obtenues par un procédé selon l'art antérieur.

L'efficacité du procédé de soudage hybride selon l'invention avec mise en oeuvre d'une ou plusieurs prises de masse à positionnement contrôlé est d'ailleurs nettement plus visible sur la figure 5 qui est un grossissement de la zone encerclée de la figure 4. Il est à souligner que le léger défaut à la partie terminale du cordon des figures 4 et 5 est le résultat d'un mauvais alignement des deux pièces soudées durant leur soudage et non pas celui d'une perturbation magnétique résiduelle ; d'ailleurs, ce léger défaut peut être facilement corrigé par un alignement plus précis des pièces 6, 7 avant soudage, c'est-à-dire lors de leur pointage par un opérateur ou par une machine automatique.

Selon l'invention, la ou les prises de masses 10 doivent être correctement agencées de manière à assurer un contact constant et continu sur la ou les pièces à souder et, pour ce faire, on peut conférer à ces prises de masses 10 des formes ou structures différentes, par exemple les prises de masse 10 peuvent être formées d'un patin à ressort n'ayant qu'un site ou une zone de contact avec la pièce ou le tube à souder (fig. 7a, 7b) ou alors plusieurs sites de contact avec les pièces à souder, chaque prise de masse 10 étant isolée électriquement de l'autre prise de masse (fig. 3a, 3b), ou encore être formées par des ressorts à lames métalliques venant chacun au contact (10a, 10b) de la surface des pièces durant le soudage (fig. 6a, 6b), chaque lame étant reliée à un générateur de courant de soudage 15, 16. Il est à souligner que le vérin mécanique montré sur les figures 3a et 3b pourrait aussi être déplaçable par actionnement pneumatique.

Il est à noter que la distance entre l'arc et une prise de masse 10 considérée est susceptible de varier à la fois selon l'axe longitudinal du cordon 2 mais aussi latéralement par rapport à l'axe longitudinal dudit cordon 2 en fonction de différents paramètres, notamment l'intensité et la tension du courant de soudage, de l'épaisseur de pénétration de soudure souhaitée, de la vitesse de soudage, par exemple plus la vitesse de soudage sera élevée, plus la prise de masse devra être proche du site d'impact 12 de l'arc électrique sur le joint 2.

Dans le cas d'une production de pièces en série, après réalisation du joint 2 de soudure sur la ou lesdites pièces 6, 7, 20, le faisceau laser est préférentiellement envoyé et/ou dévié vers des moyens d'absorption de rayonnement permettant d'absorber au moins une partie du rayonnement dudit faisceau laser, c'est-à-dire pendant au moins une partie de la durée d'arrêt de soudage s'écoulant entre la fin du soudage d'un premier joint de soudure et le commencement du soudage d'un deuxième joint de soudure, de préférence pendant toute ladite durée d'arrêt de soudage. En procédant de la sorte, on évite d'arrêter, c'est-à-dire d'éteindre le faisceau laser durant le temps nécessaire à l'évacuation des pièces soudées et à l'arrivée des nouvelles pièces à souder, ce qui permet de gagner du temps et donc de la productivité sans pour autant engendrer de détérioration de l'installation par impact du faisceau laser. Les moyens d'absorption de rayonnement comprennent de préférence une cavité d'absorption dans laquelle le rayonnement laser est absorbé.

La présente invention permet, en outre, de souder des matériaux divers, par exemple un métal ou un alliage métallique choisi parmi les aciers au carbone, les aciers comportant en surface une couche d'alliage de zinc ou tout autre alliage plus ou moins complexe destiné à améliorer la résistance à la corrosion des tôles, les aciers inoxydables, l'aluminium ou les alliages d'aluminium, les aciers à haute limite élastique (HLES).

Le procédé et l'installation de l'invention sont particulièrement bien adaptés à une production en série de pièces pour l'industrie automobile ou pour l'industrie aéronautique, tels des flancs raboutés utilisables pour fabriquer des portières de véhicules automobiles ou d'autres éléments du véhicule, ou encore des structures d'aéronefs.

## Revendications

1. Procédé de soudage d'une ou plusieurs pièces métalliques à souder ou à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d' au moins une source de courant et au moins une pièce à souder reliée à au moins un deuxième pôle d'au moins une source de courant par l'intermédiaire d'au moins une prise de masse électriquement conductrice en contact avec ladite pièce à souder,
**caractérisé en ce qu'**on opère au moins un contact entre au moins une prise de masse et la ou une pièce à souder latéralement et/ou en amont du point d'impact de l'arc électrique sur la ou les pièces à souder, en considérant le sens de formation du joint de soudure.

2. Procédé de soudage d'au moins deux pièces métalliques à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d'au moins une source de courant et au moins une desdites pièces à souder reliée à au moins un deuxième pôle d'au moins une source de courant par l'intermédiaire d'au moins une prise de masse électriquement conductrice en contact avec ladite pièce à souder,
**caractérisé en ce qu'**on opère au moins un premier contact entre au moins une première prise de masse et l'une des pièces à souder latéralement et/ou en amont du point d'impact de l'arc électrique sur les pièces à souder, en considérant le sens de formation du joint de soudure, et on opère au moins un deuxième contact entre au moins une seconde prise de masse et l'autre pièce à souder latéralement et/ou en amont du point d'impact de l'arc électrique sur les pièces à souder, en considérant le sens de formation du joint de soudure, lesdits premier contact et deuxième contact étant symétriques par rapport à l'axe longitudinal du cordon de soudure réalisé à la jonction desdites pièces.

3. Procédé de soudage d'une ou plusieurs pièces métalliques à souder ou à assembler par mise en oeuvre d'au moins un faisceau laser et d'au moins un arc électrique pour réaliser au moins un cordon de soudure, ledit arc électrique jaillissant entre au moins une électrode reliée à au moins un premier pôle d' au moins une source de courant et au moins une pièce à souder reliée à au moins un deuxième pôle d'au moins une source de courant par l'intermédiaire d'au moins une prise de masse électriquement conductrice en contact avec ladite pièce à souder,
**caractérisé en ce qu'**on maîtrise la forme et/ou l'écoulement des lignes de courant dans la ou les pièces à souder entre le point d'impact de l'arc électrique sur la ou lesdites pièces et ladite au moins une prise de masse électriquement conductrice en contact avec ladite pièce à souder, de manière à équilibrer les forces liées au champ électromagnétique induit agissant sur le bain de métal liquide obtenu par fusion des bords de la ou desdites pièces à assembler et constituant, après refroidissement et solidification, un joint soudé, lorsque ledit bain de métal liquide est traversé par lesdites lignes de courant.

4. Procédé de soudage selon l'une des revendications 1 à 3, **caractérisé en ce que** la distance séparant un plan de masse passant par un site de contact entre une prise de masse et une pièce à souder et perpendiculaire à l'axe longitudinal du cordon de soudure, et le plan d'arc passant par le site d'impact de l'arc électrique sur ladite pièce à souder et perpendiculaire à l'axe longitudinal du cordon de soudure est compris entre 0 mm et 300 mm, préférentiellement entre 1 mm et 200 mm.

5. Procédé de soudage selon l'une des revendications 1 à 4, **caractérisé en ce qu'**on soude ensemble deux pièces chacune en contact avec au moins une prise de masse, lesdites prises de masse étant isolées électriquement l'une de l'autre.

6. Procédé de soudage selon l'une des revendications 1 à 5, **caractérisé en ce qu'**on opère un contact entre au moins deux prises de masse et la ou les pièces à souder, lesdites deux prises de masse étant disposées symétriquement par rapport à l'axe longitudinal du cordon de soudure réalisé à la jonction desdites pièces.

7. Procédé de soudage selon l'une des revendications 1 à 6, **caractérisé en ce que** l'électrode est une électrode fusible ou non fusible.

8. Procédé de soudage selon l'une des revendications 1 à 7, **caractérisé en ce que** le faisceau laser est émis par un laser de type YAG ou CO₂ et/ou **en ce que** l'arc électrique est un arc-plasma, de préférence le faisceau laser et ledit arc sont délivrés par une tête de soudage unique.

9. Procédé de soudage selon l'une des revendications 1 à 8, dans lequel on utilise en tant que gaz d'assistance du faisceau laser un gaz choisi parmi l'argon, l'hélium, l'azote ou leurs mélanges et/ou on utilise en tant que gaz plasmagène un gaz choisi parmi l'argon, l'hélium ou leurs mélanges, avec éventuellement des additions d'un ou plusieurs composés secondaires choisis parmi l'azote, l'hydrogène et le dioxyde de carbone.

10. Procédé de soudage selon l'une des revendications 1 à 9, dans lequel, pendant au moins une partie de la durée d'arrêt de soudage s'écoulant entre la fin du soudage d'un premier joint de soudure et le commencement du soudage d'un deuxième joint de soudure, notamment au tout début de cette phase d'arrêt de soudage ou à la fin de la phase de soudage, on interrompt, on atténue ou on diminue l'intensité de l'arc électrique, de préférence on interrompt, on atténue ou on diminue l'intensité de l'arc électrique approximativement en synchronisme avec l'envoi et/ou la déviation du faisceau laser vers les moyens d'absorption de rayonnement permettant d'absorber au moins une partie du rayonnement dudit faisceau laser.

11. Installation de soudage hybride laser-arc permettant de souder une ou plusieurs pièces métalliques à souder ou à assembler comprenant :
- au moins un générateur de faisceau laser
- au moins une électrode pour générer au moins un arc électrique, notamment un arc plasma,
- au moins une source de courant comprenant au moins un premier pôle auquel est relié ladite électrode
- au moins une prise de masse électriquement conductrice agencée de manière à venir au contact d'au moins une pièce à souder, ladite prise de masse étant reliée à au moins un deuxième pôle d'au moins une source de courant, le point de contact entre ladite prise de masse et la ou une pièce à souder étant situé latéralement et/ou en amont du point d'impact de l'arc électrique sur la ou les pièces à souder, en considérant le sens de formation du joint de soudure.

12. Installation de soudage selon la revendication 11, **caractérisée en ce qu'**elle comporte au moins deux prises de masse isolées électriquement l'une de l'autre, de préférence lesdites deux prises de masse sont positionnées symétriquement par rapport à l'axe du cordon de soudage.

13. Installation de soudage selon l'une des revendications 11 ou 12, **caractérisée en ce qu'**elle comporte :
- des moyens d'absorption de rayonnement laser permettant d'absorber, au moins temporairement, au moins une partie du rayonnement dudit faisceau laser pendant les phases d'arrêt de soudage ;
- des moyens support de pièces permettant de supporter et/ou maintenir la ou les pièces à souder durant le soudage ;
- des moyens d'amenée automatique de la ou des pièces à souder permettant d'amener et/ou de positionner automatiquement la ou les pièces à souder sur lesdits moyens support ;
- des moyens de maintien de pièces à souder permettant de maintenir en position la ou les pièces à souder, durant le soudage, sur lesdits moyens support ;
- des moyens d'évacuation automatique de la ou des pièces soudées permettant d'enlever les pièces desdits moyens support après soudage ;
et/ou
- des moyens de pilotage permettant de piloter ou commander automatiquement les moyens d'amenée de pièces à souder ; les moyens d'évacuation des pièces soudées ; les moyens de déviation du faisceau laser ; le début et/ou la fin du soudage ; et/ou le déplacement relatif de tête distribuant l'arc et de la tête distribuant le faisceau laser par rapport aux pièces à souder.

14. Installation de soudage selon l'une des revendications 11 à 13,
**caractérisée en ce qu'**elle comporte des moyens d'équilibrage de courant permettant de contrôler la répartition du courant électrique cheminant entre chaque prise de masse et la source de courant associée à ladite prise de masse, de préférence lesdits moyens d'équilibrage de courant comportant au moins un circuit électronique permettant de commander ou maintenir un équilibre ou un déséquilibre du courant.

15. Installation de soudage selon l'une des revendications 11 à 14, **caractérisée en ce qu'**elle comporte deux prises de masse et **en ce que** l'électrode délivrant l'arc électrique de soudage, de préférence un arc plasma, est alimentée par l'un des pôles de chacune des deux sources de courant, chaque source de courant étant reliée, en outre, par son autre pôle à l'une desdites prises de masse.

16. Procédé de fabrication de pièces ou de structures soudées destinées à l'industrie automobile ou à l'industrie aéronautique, dans lequel on réalise au moins un soudage desdites pièces par mise en oeuvre d'un procédé de soudage hybride laser-arc selon l'une des revendications 1 à 10 ou d'une installation de soudage selon l'une des revendications 11 à 15, de préférence les pièces ou structures soudées sont des éléments de carrosserie de véhicule ou des structures d'aéronefs, notamment des flancs raboutés en configuration bout-à-bout ou à clin.

17. Utilisation d'un procédé de soudage hybride selon l'une des revendications 1 à 10 pour assembler par soudage des pièces métalliques ayant des épaisseurs différentes, des nuances différentes et/ou des compositions métallurgiques différentes.

18. Utilisation d'un procédé de soudage hybride selon l'une des revendications 1 à 10 pour assembler par soudage après formage en « O » les deux bords longitudinaux parallèles d'une bande métallique de manière à fabriquer un tube soudé dont l'axe de la soudure est parallèle ou incliné par rapport à l'axe longitudinal du tube.
